# EUROPÄISCHE PATENTSCHRIFT

(11) **EP 2 678 455 B1**
(45) Veröffentlichungstag und Bekanntmachung des Hinweises auf die Patenterteilung: **06.05.2015**
(21) Anmeldenummer: 12707505.9
(22) Anmeldetag: 24.02.2012
(51) Int. Cl.: C22B 7/00

(54) **VERFAHREN ZUR RÜCKGEWINNUNG VON HARTSTOFFPARTIKELN**
PROCESS FOR RECOVERING HARD MATERIAL PARTICLES
PROCÉDÉ DE RÉCUPÉRATION DE PARTICULES DE SUBSTANCE DURE

(30) Priorität: 25.02.2011 DE 102011000955
(43) Veröffentlichungstag der Anmeldung: 01.01.2014
(73) Patentinhaber: Deutsche Edelstahlwerke GmbH, 58452 Witten (DE)
(72) Erfinder: VAN BENNEKOM, André, 57234 Wilnsdorf (DE); NIESIUS, Frank, 58730 Fröndenberg (DE); KOZARISZCZUK, Matthias, 40629 Düsseldorf (DE)
(74) Vertreter: Cohausz & Florack
(86) Internationale Anmeldenummer: PCT/EP2012/053179
(87) Internationale Veröffentlichungsnummer: WO 2012/113917

(56) Entgegenhaltungen:
- JP-A- S5 213 408
- US-A- 3 438 730
- EDTMAIER C ET AL: "Selective removal of the cobalt binder in WC/Co based hardmetal scraps by acetic acid leaching", HYDROMETALLURGY, ELSEVIER SCIENTIFIC PUBLISHING CY. AMSTERDAM, NL, Bd. 76, Nr. 1-2, 1. Januar 2005 (2005-01-01), Seiten 63-71, XP004700516, ISSN: 0304-386X, DOI: 10.1016/J.HYDROMET.2004.09.002 in der Anmeldung erwähnt
- GUERMEN S ET AL: "RECOVERY OF COBALT POWDER AND TUNGSTEN CARBIDE FROM CEMENTED CARBIDE SCRAP PART II: RECOVERY OF SUBMICRON COBALT POWDER FROM THE LEACH SOLUTION//RUECKGEWINNUNG VON KOBALTPULVER UND WOLFRAMKARBID AUS HARTMETALLSCHROTTEN - TEIL II: GEWINNUNG VON SUBMIKRON-", WORLD OF METALLURGY - ERZMETALL, GDMB - MEDIENVERLAG, CLAUSTHAL-ZELLERFELD, DE, Bd. 57, Nr. 6, 1. November 2004 (2004-11-01), Seiten 341-346, XP001217430, ISSN: 1613-2394
- GUERMEN S ET AL: "RECOVERY OF COBALT POWDER AND TUNGSTEN CARBIDE FROM CEMENTED CARBIDE SCRAP PART I: KINETICS OF COBALT ACID LEACHING//RUECKGEWINNUNG VON KOBALTPULVER UND WOLFRAMKARBID AUS HARTMETALLSCHROTTEN - TEIL I: KINETIK DER SAUREN KOBALTLAUGUNG//RECUPERATION DE COB", WORLD OF METALLURGY - ERZMETALL, GDMB - MEDIENVERLAG, CLAUSTHAL-ZELLERFELD, DE, Bd. 57, Nr. 3, 1. Mai 2004 (2004-05-01), Seiten 143-147, XP001200134, ISSN: 1613-2394

## Beschreibung

Die Erfindung betrifft ein Verfahren zur Rückgewinnung von Hartstoffpartikeln, die in einer in schütt- oder rieselfähiger Form vorliegenden Reststoffmenge eines Hartmetalls vorhanden sind, das eine aus einem Stahl, Nickel oder einer Nickellegierung bestehende Matrix aufweist, in dem die Hartstoffpartikel eingelagert sind.

Hartmetallwerkstoffe der voranstehend genannten Art werden heutzutage üblicherweise durch Verfahren der Pulvermetallurgie, der Schmelzmetallurgie oder des Sprühkompaktierens hergestellt. Für die Metallmatrix werden dabei in der Regel Metallwerkstoffe verwendet, die einen niedrigeren Schmelzpunkt aufweisen als die jeweils in sie einzubettenden Hartstoffe.

Als Hartstoff kommen Ausbildungen intermetallischer Phasen, häufig Metallkarbide, jedoch auch keramische Partikel zum Einsatz, die typischerweise auf einer metallischen Bindung beruhen. Zu den in der Praxis verwendeten Hartstoffen zählen dementsprechend beispielsweise Karbide, wie TiC, WC, WC-W2C, NbC, SiC, B4C, Al4C3 oder VC₂, Nitride, wie AlN oder TiN, Boride, wie TiB2 oder MgB2, sowie Karbo-Nitride, wie Ti(C₂N) oder V (C, N) .

Unter anderem bei der mechanischen Bearbeitung von Hartmetallwerkstoffen der voranstehend erläuterten Art entstehen Reststoffe in Form von Spänen, Reststücken oder Fehlstücke, die einer Wiederverwertung zugeführt werden können. Unter diese wiederverwertbaren Reststoffe fallen auch Rückläufer, wie Bauteile, die im praktischen Einsatz durch Verschleiß oder Defekt unbrauchbar geworden sind. Sämtliche dieser Reststoffe weisen einen hohen Anteil an dem jeweiligen Hartstoff auf. Da die Herstellung in der Regel einen hohen Energie- und Apparateaufwand erfordert und somit die Hartstoffe selbst einen hohen Wert darstellen, besteht unter dem Gesichtspunkt der Ressourcenschonung und der Wirtschaftlichkeit der Wunsch nach einer einfachen, kostengünstigen Möglichkeit der Rückgewinnung der betreffenden Hartstoffe.

In der DE 197 11 764 B4 sind verschiedene Möglichkeiten des Recyclings von Hartmetallwerkstoffen beschrieben, bei denen Hartstoffpartikel in einer Aluminiummatrix gebunden sind. Sämtliche dieser Möglichkeiten basieren auf dem Gedanken, die jeweiligen Reststoffe einzuschmelzen und einer Behandlung mit einem Zusatzstoff, wie einem Gas oder einem Salz, oder einer mechanischen Behandlung, wie einer Trennung durch Sedimentation, Einwirkung von Zentrifugalkräften oder einer gekühlten Walze, die das geschmolzene Metall von dem Schmelzebad abzieht, zu unterziehen, um das Metall des Matrixwerkstoffs von den Hartstoffpartikeln zu trennen.

Neben den auf einem Aufschmelzen der Metallmatrix des Hartmetalls beruhenden Recyclingverfahren ist es beispielsweise aus dem Artikel "Selective removal of the cobalt binder in WC/Co based hardmetal scraps by acetic acid leaching" von C. Edtmaier et al., Hydrometallurgy, Volume 76, Ausgabe 1-2, Januar 2005, Seiten 63 - 71, bekannt, dass aus einem Wolframcarbid/Kobalt-Hartmetallwerkstoff der Kobalt-Anteil mit Hilfe von Essigsäure und dem Säurebad zugegebenem Sauerstoff extrahiert werden kann. Die in dem Kobalt gebundenen WC-Partikel bleiben dabei als unlöslicher Feststoff zurück.

Ein in der Praxis unter der Marke "Ferro-Titanit" erfolgreich eingesetzter, pulvermetallurgisch in Form eines Metall-Matrix Komposite ("MMC") hergestellter Hartmetallwerkstoff enthält bis zu 45 Volumen-% Titankarbid (TiC) mit einer Härte von 3200 HV. Das Titankarbid ist bei diesem Werkstoff eingebunden in eine Matrix aus Stahl, dessen Eigenschaften dem jeweiligen Verwendungszweck angepasst sind. So stehen, wie in der Datenblattsammlung "Ferro-Titanit®" 08/2003 im Einzelnen angegeben, Ferro-Titanit-Werkstoffe zur Verfügung, bei denen die Stahlmatrix aus einem martensitischen, hoch anlassbeständigen Stahl, aus einem hoch korrosionsbeständigen Stahl, aus einem aushärtbaren, hoch zähen Nickelmartensit-Stahl oder aus einem nichtmagnetisierbaren, hoch korrosions- und anlassbeständigen Stahl hergestellt ist. Die Gehalte der betreffenden Werkstoffe an den partikelförmigen TiC-Hartstoffkörnern liegen in der Praxis typischerweise im Bereich von 30 - 35 Gew.-%.

Ausgehend von dem voranstehend erläuterten Stand der Technik bestand die Aufgabe der Erfindung darin, ein kostengünstig realisierbares Verfahren zu nennen, mit dem es auf wirtschaftlich effektive Weise möglich ist, mit optimierten Rückgewinnungsraten hochwertige Hartstoffpartikel aus Reststoffen zurückzugewinnen, die aus einem Hartmetall mit einer Matrix und darin eingelagerten Hartstoffen besteht.

Diese Aufgabe ist erfindungsgemäß durch das in Anspruch 1 angegebene Verfahren gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Das erfindungsgemäße Verfahren zur Rückgewinnung von Hartstoffpartikeln, die in einer in schütt- oder rieselfähiger Form vorliegenden Reststoffmenge eines Hartmetalls vorhanden sind, das eine aus einem Stahl, aus Nickel oder einer Nickellegierung bestehende Matrix aufweist, in dem die Hartstoffpartikel eingelagert sind, umfasst die folgenden Arbeitsschritte:
- Einfüllen der Reststoffmenge in ein Säurebad, das eine starke Säure mit einem bei Raumtemperatur gemessenen pKₛ-Wert < 4 enthält,
- Zugabe eines Oxidationsmittels zu dem Säurebad,
- wobei durch die Zugabe des Oxidationsmittels oder der Säure ein Redoxpotenzial des Säurebads eingestellt wird, das in einem Sollbereich von 300 - 800 mV liegt,
- Auflösen der Matrix der Reststoffmenge,
- Abscheiden der nach dem Auflösen der Matrix in dem Säurebad enthaltenen Hartstoffpartikel.

Erfindungsgemäß werden also die Legierungselemente des Stahls der Matrix der Reststoffe in einem Säurebad in Lösung gebracht, so dass nach Abschluss des erfindungsgemäßen Verfahrens die in der aufzubereitenden Hartstoff-Restmenge vorhandenen unlöslichen Hartstoffe als einzeln separierbare, rieselfähige Partikel vorliegen.

Zu diesem Zweck wird erfindungsgemäß ein für einen in Bezug auf die angestrebte Auflösung des Stahls ausreichenden Säureangriff zusammengesetztes Säurebad bereitgestellt, in das die aufzubereitende Restmenge an Hartstoffen eingefüllt wird.

Das Säurebad enthält erfindungsgemäß eine starke Säure mit einem bei Raumtemperatur gemessenen pKₛ-Wert, der unterhalb von 4 liegt. Der pKₛ-Wert einer Säure ("Säureexponent") ist gemäß dem Römpp-Kompaktlexikon Basislexikon Chemie, 1999, S. 1944, als der negative dekadische Logarithmus der Säurekonstante definiert. Säuren, mit einem pKₛ-Wert unter 4 sind beispielsweise: HClO₄ HI, HCl, H₂SO₄, H₃O⁺, HNO₃, HSO₄, H₃PO₄, [Fe(H₂O)₆]³⁺, HF, HNO₂, HCOOH .

Zu einem geeigneten Zeitpunkt vor, nach oder während des Einfüllens der betreffenden Restmenge wird dem Säurebad ein Oxidationsmittel zugegeben, um ein bestimmtes, für das Auflösen der Matrix optimales Redoxpotenzial des Säurebads einzustellen.

Erfindungsgemäß wird dabei das Redoxpotenzial des Säurebads so eingestellt, dass es in einem Sollbereich von 300 - 800 mV liegt.

Praktische Versuche haben gezeigt, dass durch Einhalten dieser kontrollierten Bedingungen mindestens 90 % der in der Reststoffmenge enthaltenen Hartstoffe zurückgewonnen werden können. Optimale Ergebnisse ergeben sich dabei dann, wenn das Redoxpotenzial im Sollbereich von 400 - 700 mV, insbesondere 400 - 600 mV, gehalten wird. Dabei hat sich gezeigt, dass sich die durch die erfindungsgemäße Vorgehensweise erzielten hohen Rückgewinnungsraten dann besonders betriebssicher erreichen lassen, wenn das Redoxpotenzial in einem Sollbereich von 450 - 500 mV gehalten wird.

Um den Stahl oder das Nickel bzw. die Nickellegierung der Matrix des Hartmetall-Reststoffs innerhalb einer für eine wirtschaftliche Nutzung geeigneten Zeit in Lösung zu bringen, muss nach der der Erfindung zu Grunde liegenden Erkenntnis ein hoch aktives Säuresystem verwendet werden. Ein solches Säuresystem steht mit dem erfindungsgemäß verwendeten Säurebad und dem zusätzlich hinzugefügten Oxidationsmittel unter Einhaltung des für das Redoxpotential vorgegebenen Bereichs zur Verfügung.

Mit dem erfindungsgemäßen Verfahren lassen sich mit vergleichsweise schwachen und kostengünstigen Säuren, wie beispielsweise Salzsäure, unter, in Bezug auf betriebliche Auflagen, Energieverbrauch und Umweltbelastung, moderaten Reaktionsbedingungen Rückgewinnungsraten von 90 % und mehr erzielen.

Überraschenderweise hat sich herausgestellt, dass schon mit vergleichbar geringen Säurekonzentrationen die angestrebt hohen Rückgewinnungsraten erzielt werden können. So liegt gemäß einer praxisgerechten Ausführung der Erfindung die Säurekonzentration in einem Bereich von 1 bis 30 vol.-%, bevorzugt 1 bis 20 vol.-%, bezogen auf das Gesamtflüssigkeitsvolumen des Säurebads. Genauso überrachend hat sich gezeigt, dass es ausreicht, wenn das Oxidationsmittel in einer Endkonzentration von 0,1 bis 5 vol.-%, insbesondere 0,1 bis 2 vol.-%, jeweils bezogen auf das Gesamtflüssigkeitsvolumen des Säurebads gehalten wird.

Sollte der Säuregehalt des Säurebads im Laufe der Behandlungszeit unter einen Sollwert sinken, wird dem Säurebad erneut Säure zugeführt. Genauso kann dem Säurebad im Laufe der Behandlung weiteres Oxidationsmittel zugeführt werden, um das Redoxpotenzial innerhalb des optimalen Bereichs zu halten.

Wenn hier von Hartstoff-Partikeln die Rede ist, dann sind damit alle in körniger oder pulvriger Form vorliegenden Körper gemeint, die voneinander vereinzelt werden können und deren Korngröße in einen bestimmten Bereich fallen. Typischerweise haben diese Hartstoffe bei Verwendung in einem Hartmetallwerkstoff einen Korndurchmesser, der im Mittel im Bereich von bis zu 30 µm, insbesondere 5 - 20 µm, liegt. Die im Zuge des erfindungsgemäßen Recycling-Verfahrens von der Matrix separierten Hartstoff-Partikel weisen typischerweise eine deutlich feinere Körnung mit einem durchschnittlichen Durchmesser von 1 - 5 µm auf. Als solche sind sie optimal für eine Wiederverwertung zur Herstellung neuer HartmetallWerkstoffe geeignet.

Sowohl die für die Durchführung des erfindungsgemäßen Verfahrens als auch die für die Aufbereitung der dabei anfallenden Säure erforderlichen technischen Anlagen sind grundsätzlich beispielsweise aus dem Bereich der chemischen oder elektrochemischen Oberflächenbehandlung (Beizen) von Stahlflachprodukten bekannt und haben sich im großtechnischen Einsatz bewährt.

Als Säure für das Säurebad kommen beispielsweise Schwefelsäure, Salpetersäure oder Salzsäure in Frage. Die Verwendung von Salzsäure zur Auflösung der die jeweiligen Hartstoff-Partikel umgebenden Metallmatrix ist dabei besonders vorteilhaft, weil Salzsäure unter wirtschaftlichen, umwelt- und arbeitssicherheitstechnischen Aspekten Vorteile aufweist. Hinzukommt, dass Salzsäure im Vergleich zu anderen Säuren optimal aggressiv auf das aufzulösende Stahl- oder Nickelmaterial der Matrix des jeweils zu recycelnden Reststoffs wirkt. So lassen sich auch sämtliche Legierungsbestandteile des jeweiligen Stahlwerkstoffs mit der Säure des Säurebads in Lösung bringen. Dies gilt insbesondere, wenn es sich bei dem Matrixmaterial um einen unedlen, korrosionsempfindlichen Stahlwerkstoff handelt, der für Anwendungen außerhalb aggressiver, säureartiger Medien bestimmt ist.

Wie bereits erwähnt, lässt sich die Erfindung beispielsweise kostengünstig durch die Verwendung von Salzsäure für das Säurebad verwirklichen. Dabei wird die Endkonzentration der Salzsäure im Säurebad praktischerweise im Bereich von 50 bis 300 g/L, bevorzugt 100 bis 250 g/L, jeweils bezogen auf das Gesamtflüssigkeitsvolumen des Säurebads gehalten. Besonders gute Ergebnisse stellen sich ein, wenn die Endkonzentration der Salzsäure im Säurebad zwischen 1 und 30 vol.-%, bevorzugt zwischen 5 und 20 vol.-% und insbesondere zwischen 5 und 15 vol.-% bezogen auf das Gesamtflüssigkeitsvolumen des Säurebads beträgt.

Durch Zugabe eines geeigneten Oxidationsmittels lässt sich das Redoxpotenzial des Säurebads so einstellen, dass die Auflösung des Matrixmetalls durch die Säure kontrolliert voranschreitet. Das erfindungsgemäße Einstellen des Redoxpotentials erlaubt besonders hohe Rückgewinnungsraten zwischen 90 und 100 % schon bei Behandlungszeiten von nur wenigen Stunden. So haben praktische Versuche ergeben, dass Behandlungszeiten von weniger als zwölf Stunden regelmäßig ausreichen. Hierbei stellen sich optimale Behandlungszeiten ein, wenn durch die Zugabe des Oxidationsmittels ein Redoxpotenzial des Säurebads eingestellt wird, das in einem Sollbereich von 300 - 800 mV liegt. Optimale Ergebnisse ergeben sich dabei dann, wenn das Redoxpotenzial im Sollbereich von 400 - 700 mV, insbesondere 400 - 500 mV, gehalten wird. Um eine gleichmäßig hohe Wirksamkeit des Säurebades über den Verlauf des erfindungsgemäßen Verfahrens zu gewährleisten, kann das Redoxpotenzial überwacht und bei Verlassen des Sollbereichs durch erneute Zugabe von Oxidationsmittel (Erhöhung) oder Säure (Absenkung) wieder in den Sollbereich gebracht werden.

Optimale Ergebnisse stellen sich ein, wenn als Oxidationsmittel Wasserstoffperoxid (H₂O₂) verwendet wird. Hierbei wird die Endkonzentration des Wasserstoffperoxids (H₂O₂) im Bereich von maximal 0,1 bis 5 vol.-%, bevorzugt 0,1 bis 2 vol.-%, jeweils bezogen auf das Gesamtflüssigkeitsvolumen des Säurebads gehalten. Dies erweist sich insbesondere dann vorteilhaft, wenn es sich bei der Säure des Säurebads um Salzsäure (HCl) handelt. Bei einer praktischen Erprobung konnten Rückgewinnungsraten von mehr als 90 % betriebssicher erzielt werden, indem das Säurebad weniger als 2 vol.-% Wasserstoffperoxid, zwischen 5 und 20 vol.-% Salzsäure, jeweils bezogen auf das Gesamtflüssigkeitsvolumen des Säurebads, enthielt und das Redoxpotential dabei in einem Sollbereich von 300 bis 800 mV, bevorzugt 300 - 650 mV und insbesondere 450 bis 500 mV gehalten worden ist.

Eine weitere Beschleunigung der erfindungsgemäß vorgenommenen Auflösung der Matrix der Hartmetall-Reststoffmenge kann dadurch erzielt werden, dass das Säurebad auf eine oberhalb der Raumtemperatur liegende Temperatur erwärmt wird. Praktische Versuche haben in dieser Hinsicht gezeigt, dass sich optimale Verarbeitungszeiten ergeben, wenn die Temperatur des Säurebads im Bereich von 25 - 70 °C, insbesondere 25 - 60 °C, gehalten wird. Bei einer im Bereich von 60 °C liegenden Temperatur des Säurebades ergibt sich in Kombination mit der erfindungsgemäß vorgegebenen Zugabe eines Oxidationsmittels eine Auflösegeschwindigkeit, die das erfindungsgemäße Verfahren auch großtechnisch nutzbar macht. Die Temperatursteuerung kann dabei direkt durch die Zugabe des Oxidationsmittels erfolgen. So kann es zweckmäßig sein, den Temperaturverlauf des Säurebads zu überwachen und jeweils dann Oxidationsmittel nachzudosieren, wenn die Temperatur des Säurebads unterhalb eines vorgegebenen Sollwerts sinkt. Dieser kann in der Praxis beispielsweise 55 °C betragen. Aufgrund der zur Unterstützung der Umwandlung von FE²⁺ in Fe³⁺ erfolgenden Zugabe von Wasserstoffperoxid und der damit einhergehenden exothermen Reaktion kann bei entsprechender Dimensionierung auf eine gesonderte Beheizung des Säurebads verzichtet werden. Die Fe³⁺-Konzentration kann dabei durch Erfassung des Redoxpotentials des Säurebads überwacht werden.

Zur Beschleunigung der erfindungsgemäß angestrebten Auflösung der Matrix der Hartmetall-Reststoffe kann auch beitragen, dass das Säurebad während des Auflösevorgangs zumindest zeitweise gerührt wird.

Ebenso kann es zur Verkürzung der für das Auflösen der Matrix benötigten Zeit beitragen, wenn zusätzlich zu der Auflösung der Matrix im Säurebad eine elektrolytische Trennung erfolgt.

Der Fortschritt der Auflösung der Matrix des erfindungsgemäß behandelten Hartmetall-Reststoffs kann durch von Zeit zu Zeit erfolgende Überprüfung des Anteils der im Säurebad noch enthaltenen magnetisierbaren Partikeln überwacht werden. Sinkt der Anteil an magnetisierbaren Partikeln unterhalb eines Sollwerts, kann das Verfahren beendet werden.

Die abschließende Abscheidung der aus der aufgelösten Matrix ausfallenden Hartstoff-Partikel kann auf einfache Weise dadurch erfolgen, dass das Abscheiden der Hartstoffpartikel als Sedimentieren im ruhenden Säurebad durchgeführt wird. Selbstverständlich sind auch andere Abscheideverfahren, wie eine Filterung oder eine mechanisch unterstützte Trennung der Säure von den Partikeln, denkbar.

Nachdem das Säurevolumen zu einem zumindest überwiegenden Teil von den erhaltenen Hartstoffpartikeln getrennt worden ist, sollten die abgeschiedenen Hartstoffpartikel mit einem neutralen Spülmittel gespült werden, um sie von anhaftender Säure zu befreien und einen für die Weiterverarbeitung unbedenklichen pH-Wert einzustellen.

Ein wesentlicher Vorteil der erfindungsgemäßen Vorgehensweise bei der Rückgewinnung von in Hartmetall-Reststoffen enthaltenen Hartstoffen besteht darin, dass auch die im Säurebad gelösten Elemente der Matrix auf an sich aus dem Bereich der Beiz-Behandlung von Stahlflachprodukten bekannte Weise weitestgehend vollständig wieder zurückgewonnen werden können. Abhängig von der Art der verwendeten Säure und der Zusammensetzung des Säurebads kann dabei die Auflösung der Matrix der Hartmetall-Reststoffe auch so erfolgen, dass bestimmte Bestandteile des Stahls, wie beispielsweise Mn, nicht in der Säure gelöst werden, sondern als stückige Partikel vorhanden bleiben, die anschließend ebenfalls einer Weiterverarbeitung zugeführt werden können.

Besonders geeignet ist das erfindungsgemäße Verfahren zur Aufbereitung von TiC-Hartmetallwerkstoffen, bei denen Titankarbide jeweils in einer Matrix gebunden sind. Der Stahl der Matrix kann dabei unterschiedlichste Zusammensetzungen aufweisen, um an die jeweilige Verwendung optimal angepasste Eigenschaften des Hartmetalls zu gewährleisten.

Nachfolgend wird die Erfindung anhand von Ausführungsbeispielen näher erläutert.

Im Rahmen eines Laborversuchs ist eine aus Spänen eines TiC-Hartmetallwerkstoffs bestehende Reststoffmenge verarbeitet worden. Der TiC-Hartmetallwerkstoff wies 33 Gew.-% TiC-Partikel in einer magnetisierbaren Stahlmatrix auf, die neben Eisen und unvermeidbaren Verunreinigungen (in Gew.-%) 0,65 % C, 3 % Mo und 3 % Cr enthielt.

Die Reststoffmenge ist im Verhältnis 10:1 mit einem Salzsäurebad vermischt worden, dessen Salzsäurekonzentration 180 g/L betrug.

Anschließend ist dem Säurebad 20%-iges Wasserstoffperoxid zugegeben worden, um das Redoxpotential des Säurebads auf einen zwischen 400 mV und 450 mV liegenden Wert einzustellen. Dieses Redoxpotenzial ist während des gesamten Prozesses aufrechterhalten worden. Dabei ist zusätzliches Wasserstoffperoxid nachdosiert worden, wenn das Redoxpotenzial unter einen Sollwert von 410 mV fiel.

Während des Reaktionsprozesses wurden das Säurebad und die Reststoffmenge kontinuierlich gerührt, um Konzentrations- und Temperaturunterschiede auszugleichen und damit einhergehend die Auflösezeit zu verkürzen.

Nach einer Reaktionszeit von 4 Stunden erfolgte eine erste Kontrolle des Anteils an bis dahin noch verbliebener Reststoffmenge mit Hilfe eines Magnetstabes, an dem sich im HCl-Säurebad noch vorhandene Späne der Reststoffmenge sammelten. Diese Messung wurde wiederholt, bis sich nach einer Behandlungsdauer von insgesamt etwa 6 Stunden in einer entnommenen Probe keine Späne mehr an dem Magnetstab zeigten. Dies wurde als Signal dafür gewertet, dass zumindest das Eisen des Stahls der Stahlmatrix vollständig in Lösung mit der Säure des Säurebads gegangen ist.

Während der Reaktionszeit bilden sich Gasblasen, die instabil waren und durch die Rührwirkung zerstört wurden.

Nach vollständigem Auflösen der Stahlmatrix der Hartstoff-Restmenge erfolgte das Sedimentieren des verbliebenen Titancarbids über 75 Minuten. Dabei wurde nach 20 Minuten eine erste Probe genommen und festgestellt, dass sich zwar schon für eine wirtschaftliche Ausbeute ausreichend viel TiC abgesetzt hat, dass jedoch ein optimales Ergebnis bei einer Sedimentationszeit von 60 Minuten erreicht werden konnte. Dementsprechend sieht eine praxisgerechte Ausgestaltung der Erfindung vor, dass für den Absetzvorgang eine Dauer von 20 - 70 Minuten, insbesondere 60 Minuten, eingestellt wird.

Für die weitere Verarbeitung sind etwa 90 % des Gesamtvolumens der Flüssigphase des Säurebads über dem Titancarbid abgezogen und durch Spülwasser ersetzt worden. Das erhaltene Titancarbid ist dann 4- bis 6-fach mit Leitungswasser gespült worden. Auf diese Weise konnte ein pH-Wert von ca. 6 erreicht werden.

Das beschriebene Vorgehen wurde durch zwei mit denselben Betriebsparametern wiederholte Versuche abgesichert. Im Rahmen dieser Versuche wurde bezogen auf die jeweils eingesetzte TiC-Hartmetall-Reststoffmenge das darin ursprünglich enthaltene Titancarbid nahezu vollständig zurückgewonnen. Das in Metallmatrix gebundene Eisen sowie weitere Legierungselemente wurden vollständig gelöst in der Salzsäure des verwendeten Säurebads gemessen.

Anschließend sind betriebsnahe Versuche in einem Rührreaktor mit einem Füllvolumen von ca. 600 Liter durchgeführt worden. Der Rührreaktor verfügte über einen Ablass, über den das HCl-Säurebad bis auf ein Restvolumen von 15 % des Ausgangsvolumens angelassen werden konnte. Zur weiteren Verringerung des im Rührreaktor vorhandenen Säurebadvolumens insbesondere während der Spülvorgänge wurde eine Tauchpumpe eingesetzt.

Die Messung der Temperatur und des Redoxpotentials des im Reaktor enthaltenen Säurebads sowie die Prüfung des Anteils der im Säurebad noch vorhandenen Hartmetall-Reststoffmenge erfolgten durch diskontinuierlich mittels einer Schöpfkelle entnommene Proben.

In Abhängigkeit vom jeweils erfassten Redoxpotential wurde Wasserstoffperoxid zugegeben.

Ziel der Versuche war die Rückgewinnung von ca. 35 kg Titancarbid. Hierfür wurde in Summe eine Restmenge von 100 kg TiC-Hartstoff-Spänen eingesetzt, die bei der spanabhebenden Bearbeitung von aus dem TiC-Hartmetall bestehenden Rohlingen angefallen sind.

Im Detail wurden für die Versuche folgende Betriebsparameter eingestellt und Arbeitsschritte durchgeführt:
- Es wurden bei laufendem Rührer und einer Vorlage von 120 Litern Wasser 200 Liter Salzsäure (entsprechend einer Konzentration von 180 g HCl/L) in den Reaktor gegeben.
- In die Salzsäure wurden anschließend vier Portionen von je 25 kg der Reststoffmenge gefüllt.
- Es wurden insgesamt etwa 6 Liter H₂0₂ nach Bedarf dosiert, um das Redoxpotential des Säurebads im Bereich von 400 - 500 mV zu halten. Im Durchschnitt lag das Redoxpotenzial so bei ca. 450 mV. Die Dosierung des Wasserstoffperoxids erfolgte in jeweils 100 ml-Chargen.
- Die Maximaltemperatur des Säurebads wurde auf 60 °C eingestellt. Eine separate Erwärmung des Säurebads war dank der im Reaktor ablaufenden exothermen Reaktionen nicht erforderlich. Sank die Temperatur des Säurebads unter 55 °C, so erfolgte eine Nachdosierung von Wasserstoffperoxid.
- Die Versuche wurden jeweils betrieben, bis sich keine Gasblasen mehr bildeten. Abhängig von den jeweils eingestellten Betriebsbedingungen "Säurebad-Temperatur" und "Redoxpotenzial des Säurebads" stellte sich dies nach einer 2 - 6 h betragenden Reaktionszeit ein.
- Die Prüfung des im Säurebad noch vorhandenen Anteils an magnetisierbaren Partikeln erfolgte über Probenahme und Einsatz eines Magnetstabs. War magnetisierbares Material noch vorhanden, wurde Säure bzw. H₂O₂ nachdosiert.
- Nach Auflösung der Stahlmatrix der Reststoffmenge wurde über eine Dauer von 30 Minuten die Sedimentation des als Rückstand verbliebenen Titancarbids durchgeführt.
- Dann wurde das Säurebad abgelassen.
- Anschließend wurde der Behälter mit dem darin enthaltenen Titancarbid mit 500 Liter Wasser gespült, eine weitere Sedimentation vorgenommen und schließlich das Spülwasser abgelassen. Dieser Vorgang wurde wiederholt, bis ein pH-Wert der TiC-Partikel von 6 erreicht war.
- Nach Erreichen dieses für die Weiterverarbeitung unbedenklichen pH-Werts wurde der Reaktor nochmals mit Wasser gefüllt und unter Einsatz des Rührers ein Flockungsmittel zugegeben, um die TiC-Partikel dann in einen Auffangbehälter auszuspülen, in dem sie einem weiteren Dekantier- und Einengungsschritt unterzogen worden sind.
- Schließlich sind die erhaltenen TiC-Partikel getrocknet und der Weiterverarbeitung zugeführt worden. Ihre Korngröße betrug im Mittel 1 - 5 µm und erwies sich als optimal für die Herstellung von Hartmetallwerkstoffen, von denen eine besonders feine, gleichmäßige Verteilung der Eigenschaften verlangt wird. Insgesamt wurden 33,5 kg TiC erhalten. Die Rückgewinnungsrate betrug demnach 95,7 %.

## Patentansprüche

1. Verfahren zur Rückgewinnung von Hartstoffpartikeln, die in einer in schütt- oder rieselfähiger Form vorliegenden Reststoffmenge eines Hartmetalls vorhanden sind, das eine aus einem Stahl, aus Nickel oder aus einer Nickellegierung bestehende Matrix aufweist, in der die Hartstoffpartikel eingelagert sind, umfassend die folgenden Arbeitsschritte:
- Einfüllen der Reststoffmenge in ein Säurebad, das eine starke Säure mit einem bei Raumtemperatur gemessenen pKₛ-Wert < 4 enthält,
- Zugabe eines Oxidationsmittels zu dem Säurebad,
- wobei durch die Zugabe des Oxidationsmittels oder der Säure ein Redoxpotenzial des Säurebads eingestellt wird, das in einem Sollbereich von 300 - 800 mV liegt
- Auflösen der Matrix der Reststoffmenge,
- Abscheiden der nach dem Auflösen der Matrix in dem Säurebad enthaltenen Hartstoffpartikel.

2. Verfahren nach Anspruch 1, **dadurch gekennzeichnet, dass** das Säurebad Salzsäure, Schwefelsäure oder Salpetersäure enthält.

3. Verfahren nach einem der voranstehenden Ansprüche, **dadurch gekennzeichnet**, d a s s durch die Zugabe des Oxidationsmittels oder der Säure ein Redoxpotenzial des Säurebads eingestellt wird, das in einem Sollbereich von 300 - 650 mV liegt.

4. Verfahren nach einem der voranstehenden Ansprüche, **dadurch gekennzeichnet**, d a s s das Redoxpotenzial überwacht und bei Verlassen des Sollbereichs durch erneute Zugabe von Oxidationsmittel oder Säure in den Sollbereich gebracht wird.

5. Verfahren nach einem der voranstehenden Ansprüche, **dadurch gekennzeichnet**, d a s s das Säurebad erwärmt wird.

6. Verfahren nach Anspruch 5, **dadurch gekennzeichnet, dass** die Temperatur des Säurebads im Bereich von 25 - 70 °C gehalten wird.

7. Verfahren nach Anspruch 6, **dadurch gekennzeichnet, dass** die Temperatur des Säurebads ≤ 60 °C gehalten wird.

8. Verfahren nach einem der Ansprüche 6 oder 7, **dadurch gekennzeichnet, dass** die Zugabe des Oxidationsmittels erfolgt, solange die Temperatur des Säurebads ≤ 55 °C beträgt.

9. Verfahren nach einem der voranstehenden Ansprüche, **dadurch gekennzeichnet, dass** als Oxidationsmittel Wasserstoffperoxid (H₂O₂) verwendet wird.

10. Verfahren nach einem der voranstehenden Ansprüche, **dadurch gekennzeichnet, dass** das Säurebad während des Auflösens der Metallmatrix zumindest zeitweise gerührt wird.

11. Verfahren nach einem der voranstehenden Ansprüche, **dadurch gekennzeichnet, dass** zusätzlich zu der Auflösung im Säurebad eine elektrolytische Trennung erfolgt.

12. Verfahren nach einem der voranstehenden Ansprüche, **dadurch gekennzeichnet, dass** das Verfahren beendet wird, wenn der Gehalt an magnetisierbarem Material in dem Säurebad unterhalb eines Sollwerts liegt.

13. Verfahren nach einem der voranstehenden Ansprüche, **dadurch gekennzeichnet, dass** das Abscheiden der Hartstoffpartikel als Sedimentieren im ruhenden Säurebad durchgeführt wird.

14. Verfahren nach einem der voranstehenden Ansprüche, **dadurch gekennzeichnet, dass** die abgeschiedenen Hartstoffpartikel mit einem neutralen Spülmittel gespült werden.

15. Verfahren nach einem der voranstehenden Ansprüche, **dadurch gekennzeichnet, dass** die in dem Säurebad gelösten Metalle der Metallmatrix chemisch oder elektrochemisch zurückgewonnen werden.

## Claims

1. Process for recovering hard material particles which are present in a residue quantity, which is in a free-flowing or pourable form, of a hard metal which has a matrix consisting of a steel, of nickel or of a nickel alloy, in which the hard material particles are embedded, comprising the following production steps:
- pouring the residue quantity into an acid bath which contains a strong acid having a pKₐ value measured at room temperature of < 4,
- adding an oxidant to the acid bath,
- wherein by adding the oxidant or the acid a redox potential of the acid bath is set which is within a desired range of 300 - 800 mV,
- dissolving the matrix of the residue quantity,
- deposition of the hard material particles contained in the acid bath after dissolving the matrix.

2. Process according to Claim 1, **characterised in that** the acid bath contains hydrochloric acid, sulphuric acid or nitric acid.

3. Process according to any one of the preceding claims, **characterised in that** by adding the oxidant or the acid a redox potential of the acid bath is set which is within a desired range of 300 - 650 mV.

4. Process according to any one of the preceding claims, **characterised in that** the redox potential is monitored and if it departs from the desired range it is brought back into the desired range by a fresh addition of oxidant or acid.

5. Process according to any one of the preceding claims, **characterised in that** the acid bath is heated.

6. Process according to Claim 5, **characterised in that** the temperature of the acid bath is kept within the range of 25 - 70 °C.

7. Process according to Claim 6, **characterised in that** the temperature of the acid bath is kept at ≤ 60 °C.

8. Process according to either of Claims 6 or 7, **characterised in that** the oxidant is added as long as the temperature of the acid bath is ≤ 55 °C.

9. Process according to any one of the preceding claims, **characterised in that** the oxidant used is hydrogen peroxide (H₂O₂).

10. Process according to any one of the preceding claims, **characterised in that** at least at times the acid bath is stirred when the metal matrix is being dissolved.

11. Process according to any one of the preceding claims, **characterised in that** an electrolytic separation takes place in addition to the dissolving step in the acid bath.

12. Process according to any one of the preceding claims, **characterised in that** the process is terminated when the content of magnetisable material in the acid bath is below a given value.

13. Method according to any one of the preceding claims, **characterised in that** the deposition of the hard material particles is carried out as sedimentation in the still acid bath.

14. Method according to any one of the preceding claims, **characterised in that** the deposited hard material particles are rinsed with a neutral rinsing agent.

15. Method according to any one of the preceding claims, **characterised in that** the metals of the metal matrix dissolved in the acid bath are chemically or electrochemically recovered.

## Revendications

1. Procédé de récupération de particules de substance dure qui se présentent sous la forme d'une quantité de matières résiduaires d'un métal dur à déversement et écoulement libres, comprenant une matrice consistant en acier, en nickel ou en alliage de nickel, dans laquelle les particules de substance dure sont incluses, ledit procédé comprenant les étapes suivantes :
- versement de la quantité de matières résiduaires dans un bain acide qui contient un acide fort dont la valeur pKₛ, mesuré à la température ambiante, est < 4,
- addition d'un agent d'oxydation dans le bain acide,
- sachant que, par l'addition de l'agent d'oxydation ou de l'acide, est réglé un potentiel oxydoréducteur du bain acide qui est situé dans une plage de consigne de 300 à 800 mV,
- dissolution de la matrice de la quantité de matières résiduaires,
- séparation des particules de substance dure contenues dans le bain acide après la dissolution de la matrice.

2. Procédé selon la revendication 1,
**caractérisé en ce que** le bain acide contient de l'acide chlorhydrique, de l'acide sulfurique ou de l'acide nitrique.

3. Procédé selon l'une des revendications précédentes,
**caractérisé en ce que**, par l'addition de l'agent d'oxydation ou de l'acide est réglé un potentiel oxydoréducteur du bain acide qui est situé dans une plage de consigne de 300 à 650 mV,

4. Procédé selon l'une des revendications précédentes,
**caractérisé en ce que** le potentiel oxydoréducteur est surveillé et est ramené dans la plage de consigne par une nouvelle addition d'agent d'oxydation ou d'acide dans le bain acide, quand il quitte ladite plage de consigne.

5. Procédé selon l'une des revendications précédentes,
**caractérisé en ce que** l'on chauffe le bain acide.

6. Procédé selon la revendication 5,
**caractérisé en ce que** la température du bain acide est maintenue dans une plage de 25 à 70 °C.

7. Procédé selon la revendication 6,
**caractérisé en ce que** la température du bain acide est maintenue à ≤ 60 °C.

8. Procédé selon l'une des revendications 6 ou 7,
**caractérisé en ce que** l'addition d'agent d'oxydation est effectuée tant que la température du bain acide est ≤ 55 °C.

9. Procédé selon l'une des revendications précédentes,
**caractérisé en ce que** l'agent d'oxydation utilisé est du peroxyde d'hydrogène (H₂O₂).

10. Procédé selon l'une des revendications précédentes,
**caractérisé en ce que** le bain acide est agité, au moins par moments, pendant le dissolution de la matrice métallique.

11. Procédé selon l'une des revendications précédentes,
**caractérisé en ce que,** en plus de la dissolution dans le bain acide, est effectuée une séparation électrolytique.

12. Procédé selon l'une des revendications précédentes,
**caractérisé en ce que** le procédé est terminé quand le matériau magnétisable, dans le bain acide, présente une valeur inférieure à une valeur de consigne.

13. Procédé selon l'une des revendications précédentes,
**caractérisé en ce que** la séparation des particules de substance dure est effectué dans un bain acide immobile.

14. Procédé selon l'une des revendications précédentes,
**caractérisé en ce que** les particules de substance dure séparées sont lavées avec un agent de lavage neutre.

15. Procédé selon l'une des revendications précédentes,
**caractérisé en ce que les** métaux de la matrice métallique, dissous dans le bain acide, sont récupérés chimiquement ou électro-chimiquement.
